# EUROPÄISCHE PATENTSCHRIFT

(11) **EP 1 048 100 B1**
(45) Veröffentlichungstag und Bekanntmachung des Hinweises auf die Patenterteilung: **06.07.2005**
(21) Anmeldenummer: 98959726.5
(22) Anmeldetag: 15.10.1998
(51) Int. Cl.: H02B 13/075

(54) **KURZSCHLIESSER, INSBESONDERE FÜR EINE STÖRLICHTBOGEN-SCHUTZVORRICHTUNG ZUR VERWENDUNG IN ANLAGEN ZUR VERTEILUNG ELEKTRISCHER ENERGIE**
SHORT-CIRCUITER, ESPECIALLY FOR AN ACCIDENTAL ARC PROTECTION DEVICE FOR USE IN SYSTEMS WHICH DISTRIBUTE ELECTRIC ENERGY
COURT-CIRCUITEUR, NOTAMMENT POUR DISPOSITIF DE PROTECTION CONTRE LES ARCS DE LUMIERE PARASITE, UTILISE DANS DES SYSTEMES DE REPARTITION D'ENERGIE ELECTRIQUE

(30) Priorität: 22.10.1997 DE 19746564
(43) Veröffentlichungstag der Anmeldung: 02.11.2000
(73) Patentinhaber: Moeller GmbH, 53115 Bonn (DE)
(72) Erfinder: WEY, Paul, D-53340 Meckenheim (DE); FUSS, Paul, D-53111 Bonn (DE); BERGER, Frank, D-53913 Swistal-Miel (DE); KREMERS, Wolfgang, D-53229 Bonn (DE); SCHÄFER, Helge, D-98693 Unterpörlitz (DE); FREYERMUTH, Thomas, D-53505 Kalenborn (DE)
(86) Internationale Anmeldenummer: PCT/DE1998/003023
(87) Internationale Veröffentlichungsnummer: WO 1999/021255

(56) Entgegenhaltungen:
- DE-A- 2 623 816
- US-A- 3 269 987

## Beschreibung

Die Erfindung betrifft einen Kurzschließer nach dem Oberbegriff des Anspruches 1.

Ein Kurzschließer dieser Art ist aus US-A-3 269 987 bekannt.

Aus der WO 95/22167 ist ein weiterer Kurzschließer bekannt geworden, der als Serienprodukt in Niederspannungs-Schaltanlagen Anwendung findet und sich im praktischen Einsatz bewahrt hat. Durch den geringen Vakuumspalt begrenzt sich der Einsatz bisher nur auf die Niederspannung.

Aus der DE 94 19 141 U1 ist ein Kurzschließer ohne elektrische Energiespeicher und Leistungsthyristoren bekannt, der als zylindrische Patrone nach dem Vorbild der WO 95/22167 jedoch mit einem integriertem Sprengsatz ausgefuhrt ist.
Im dem Kurzschließer wird ein Gasdruck gemaß Anspruch 8 erzeugt, der ein Bolzen zur Erzeugung eines metallischen Kurzschlusses bewegt.

Zur Potentialtrennung ist ein Isolierring mit einer dünnen Membran vorgesenen Der Anschluß von mindestens zwei Patronen an einem Sammelschienensystem ist nicht naher gezeigt.
Der Bolzen muß die Wegstrecke des Isolierendes uberwinden bis ein Kurzschluß erzeugt wird.

Aus der DD 226 441 A1 ist ein Kurzschlineßer mit einer Membran, einem beweglichem Kolben und konischen Elementen bekannt.

Kurzschließer mit einem Gasgenerator sind aus der DE 196 01 639 A1 und DE 42 36 623 A1 bekannt.

Aufgabe der Erfindung ist es, ein Kurzschließer unter Verwendung eines Gasgenerators nach dem Oberbegriff des Anspruches 1 zu schaffen, der als kostengunstiges Senenprodukt herstellbar ist, aus wenigen Komponenten besteht, klein, relativ leicht, wartungsarm, leicht anschließbar und für hohe Ströme und Spannungen geeignet ist.

Die Aufgabe der Erfindung wird durch die kennzeichnenden Merkmale des Anspruches 1 gelost, wahrend in den Unteranspruchen besonders vorteilhafte Weiterbildungen der Erfindung gekennzeichnet sind.

Anhand der Zeichnung, in der ein Ausfuhrungsbeispiel dargestellt ist, sollen die Erfindung, weitere Ausgestaltungen und Verbesserungen der Erfindung und weitere Vorteile näher beschrieben und erlautert werden.

Es zeigt:
- Fig. 1: eine perspektivische Darstellung einer ersten Ausfuhrungsform des anschlußfengen Kurzschließers,
- Fig. 2: eine Schnittdarstellung einer ersten Ausfuhrungsform der Kurzschließereinheit,
- Fig. 3: eine Auschnittsvergroßerung der in Fig. 2 gezeigten Kurzschließereinheit,

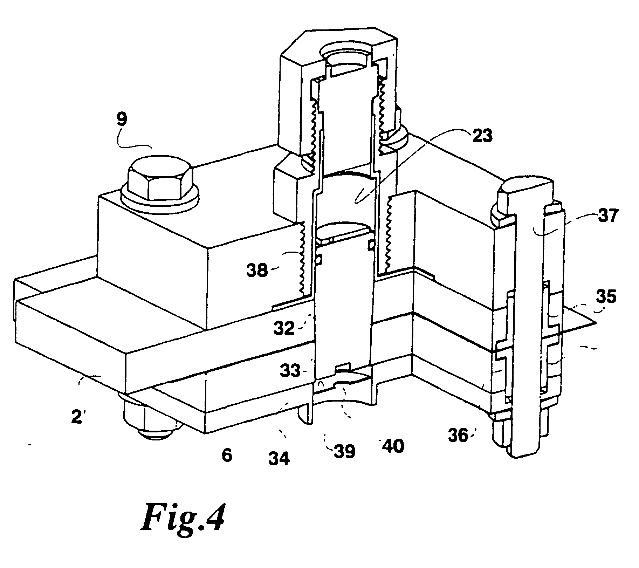

- Fig. 4: eine Schnittdarstellung der ersten Ausfuhrungsform der Kurzschließereinheit im ausgelosten Zustand,
- Fig. 5: eine Schnittdarstellung einer zweiten Ausführungsform der Kurzschließereinheit,
- Fig. 6: eine Schnittdarstellung einer dritten Ausführungsform der Kurzschließereinheit,
- Fig. 7: eine Schnittdarstellung einer vierten Ausführungsform der Kurzschließereinheit,
- Fig. 8: eine Schnittdarstellung einer fünften Ausführungsform der Kurzschließereinheit und

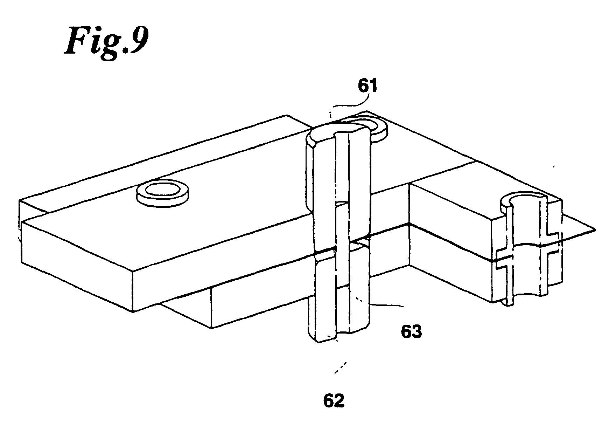

- Fig. 9: eine Darstellung der Montage der Kurzschließereinheit gemaß Fig. 2,
- Fig. 10: eine Prinzipdarstellung der Montage des Kurzschließerkolbens und
- Fig 11: eine Prinzipdarstellung des Kurzschließerkolbens in Ausgelost-Stellung gemäß Fig 4.

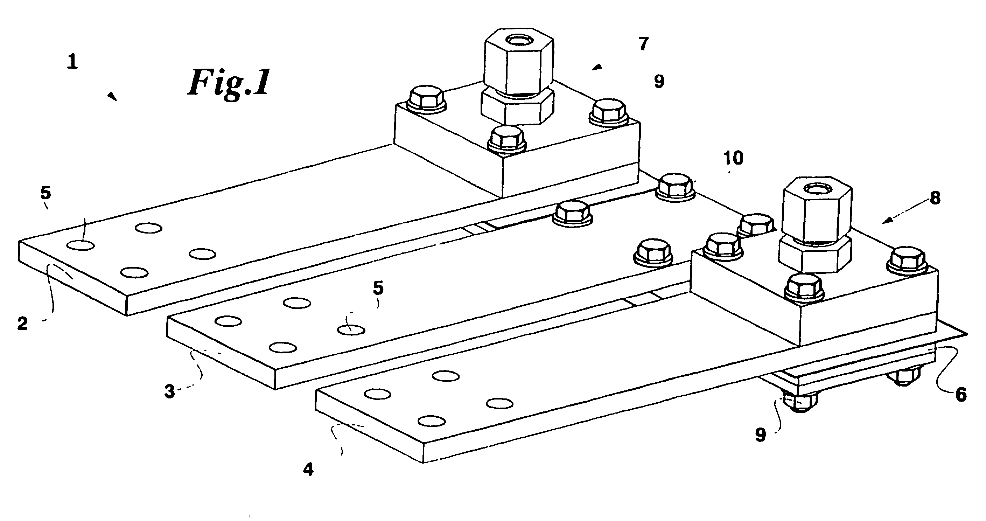

Die Fig. 1 zeigt den anschlußfertigen Kurzschließer 1 mit drei flach nebeneinander angeordneten Anschlußschienen 2.3.4 in Form von Flachschienen mit entsprechenden Anschlußbohrungen 5 wie sie in dem Niederspannungs-Anlagenbau ublich sind.

Die mittlere Anschlußschiene 3 ist am Ende, bzw. am gegenüberliegenden Ende der Anschlußbohrungen 5, mit einer Querstromschiene 6 elektrisch verbunden, wobei die Querstromschiene 6 im nichtausgelösten Zustand von den Anschlußschienen 2, 4 isoliert ist. Die Schienenanordnung ist E-förmig.

An den Enden der Anschlußschienen 2 und 4 sind zwei Kurzschließereinheiten 7,8 mit jeweils einem Gasgeneratorantrieb auf Nitrocellulose-Basis angeordnet, wie er bei Airbags oder Gurtstraffern verwendet wird.

Die Anschlußschienen 2,3,4, die Querstromschiene 6 und weitere spater beschriebene Isolierteile werden mit insgesamt zwolf Schrauben-Mutter-Verbindungen 9 und Federscheiben 10 zu einem E-formigen Paket gehalten.

Bei Zündung der Kurzschließereinheiten 7 und 8 entsteht ein dreipoliger Kurzschluß, der innerhalb einer Millisekunde einen Storlichtbogen loscht.
Die Kurzschließereinheiten 7 und 8 werden durch eine Auswerteelektonik angesteuert, die mit schnellen Strom- und Lichtsensoren zur Storlichtbogenerkennung versehen ist. Die Ansteuerung kann mit jeder Art von Sensoren erfolgen Ebenso ist der Kurzschließer zum Schutz von Verbrauchern und Betriebsmittel bei Kurzschluß einsetzbar.

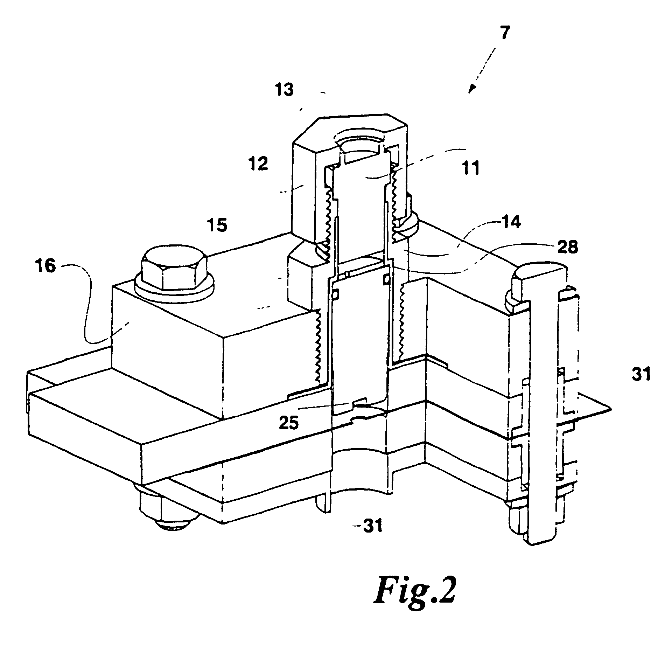

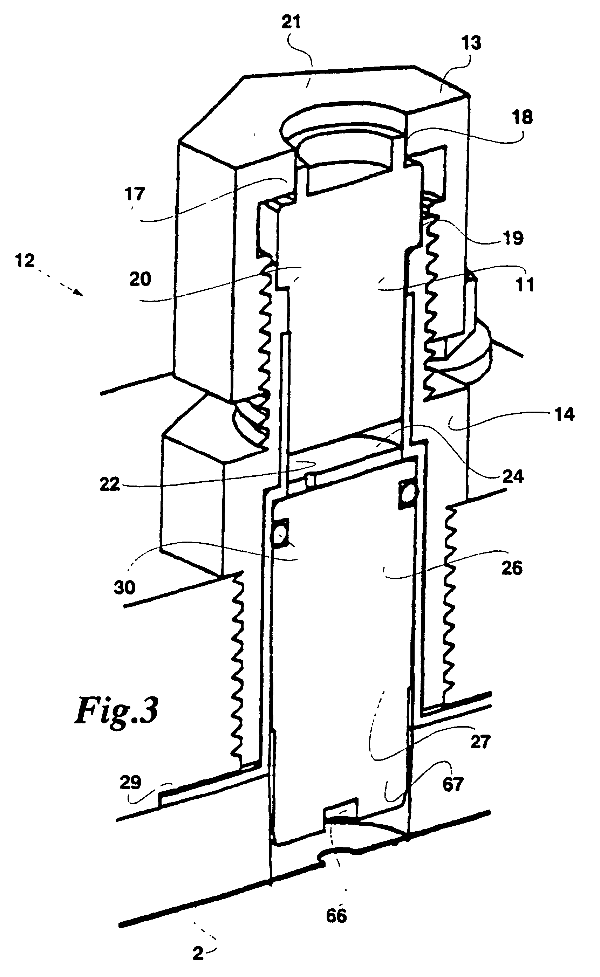

In der Fig. 2 ist eine Schnittdarstellung einer ersten Ausführungsform der Kurzschließereinheit gezeigt, wobei Fig. 3 eine Vergrößerung zeigt.

Die Kurzschließereinheit 7 besteht aus einem Gasgenerator 11, einer Kapselung 12 aus Metall für den Gasgenerator 11 mit einem als Uberwurfmutter ausgebildeten ersten Kapselteil 13, der uber ein zweites Kapselteil 14 verschraubt wird. Das zweite Kapselteil 14 weist oben und unten ein Außengewinde und in der Mitte ein mutterförmiges Teil 15 auf, wobei das untere Außengewinde für die Verschraubung einer ersten oberen Isolierplatte 16 vorgesehen ist.
Der Gasgenerator 11 ist derart in der Kapselung gasdicht eingebettet, daß das erstes Kapselteil 13 den Gasgenerator an Dichtungsflächen 17-20 gegen das zweite 14 Kapselteil druckt und der Gasdruck sich nur nach unten auswirken kann. Das erste Kapselteil 13 ist mit einer Zundoffnung 21 fur eine Zundleitung versehen.

Die Kurzschließereinheit 7 weist einen ersten Druckraum 22 und einen zweiten Druckraum 23 auf, wobei in dem ersten Druckraum 22 der Gasgenerator 11 angeordnet und auf der gegenuberliegenden Seite des Gasgenerators 11 eine Druckmembran 24 vorhanden ist, die den ersten und zweiten Druckraum 22, 23 trennt und bei überschreiten eines definierten Druckes bricht. In dem zweiten Druckraum 23 ist das kurzschließende Element 25 kolbenartig angeordnet. Bei Zündung des Antriebes bewegt sich das kurzschließende Element 25 schlagartig in Zeiten innerhalb einer Millisekunde.

In dem ersten Druckraum 22 kann ein hoher Druck von 70-100 bar, vorzugsweise 90 bar, entstehen, weil die Druckmembran 24 vor ihren Wegbrechen das Volumen nahezu konstant halt Nach dem Wegbrechen gelangt das Gas in dem zweiten Druckraum 23 Der Spitzendruck nach dem Wegbrechen der Druckmembran 24 betragt 600 bis 900 bar, vorzugsweise 800 bar.

Das kurzschließende Element 25 ist ein Kurzschließerbolzen, der aus einem oberen zylindrischen Abschnitt 26, einem konischen Abschnitt 27 mit Morsekegel 2 und einem unteren zylindrischen Abschnitt 67 besteht, wobei der zylindrische Abschnitt 26 nahezu bündig, d.h mit Spielpassung, in der Kolbenfuhrung liegt und der untere zylindrische Abschnitt mit einer Spielpassung gegenuber der Bohrung 33 versehen ist.

In der Kapselung 12 ist eine im Querschnitt H-förmige Isolierhulse 28 aus Isolierstoff vorhanden, an der auf der einen Seite der Gasgenerator 11 gasdicht und elektrisch isoliert von den Kurzschließerbolzen angeordnet ist und auf der anderen Seite der Kurzschließerbolzen kolbenartig geführt wird, wobei das Querteil die Druckmembran 24 ist.
Die Druckmembran 24 ist ferner mit Sollbruchstellen versehen.

Die Isolierhülse 28 ist auf der Kolbenseite mit einem Kragen 29 versehen, der zwischen der ersten Isolierplatte 16 und der Anschlußschiene 2 eingeklemmt ist und zusätzlich elektrisch isolierend wirkt.

Der Kurzschließerkolben bzw Element 25 ist mit einem O-Ring 30 versehen. Er kann auch mit zwei oder mehreren im Abstand angeordneten O-Ringen versehen sein.
Der O-Ring ist in dem Kurzschließerkolben in einer nutartigen Aufnahme angeordnet und als gummiartige Dichtung ausgefuhrt.

Der Kurzschließer 1 besteht aus einem sandwichartigen Paket aus Strom- Quer- bzw Anschlußschienen 2,4,6 Isolierplatten 16. 34 und mindesten einer dünnen Isolierfolie 31, die als Membrane wirkt.

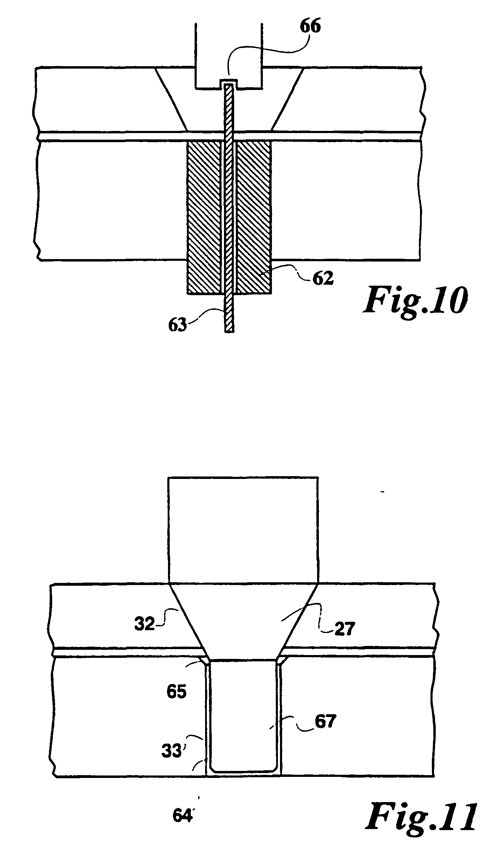

In den Quer- und Anschlußschienen 2.6 sind ubereinander fluchtende Bohrungen 32,33 vorhanden, wobei die obere Bohrung 32 leicht konisch entsprechend der Form des Kurzschließerkolbens ist Sie wird mit MK2, d.h. Morsekegel 2 bzw 2.60° gefertigt, wodurch ein Prellen vermieden wird.
Die untere Bohrung ist nicht konisch, sondern zylindnsch ausgefuhrt und gegenuber dem Kurzschließerkolben mit einer Spielpassung versehen, wie Fig. 11 zeigt. Das Spiel 64 beträgt wenige Hundertstel Millimeter, vorzugsweise 0.01 bis 0.02 mm.
Obwohl ein kleiner Luftspalt wahrend der Stromubertragung vorhanden ist, konnen überraschender Weise 100 kA eine halbe Sekunde lang fließen Trotz Luft entstehen keine Lichtbögen beim Schalten. Die Spielpassung ist überraschender Weise vorteilhafter als die Presspassung, bei der eine Deformation eintritt.

Der obere Bereich 65 der unteren Bohrung 33 ist trichterformig, was den Auslösevorgang verbessert Das Fügen des Kurzschließerkolbens, was durch den Bereich 65 realisiert wird, ist wichtiger als ein sauberes Stanzen der Membrane, z.B. mit einer rechtwinkeligen Kante.

Die Stromschienen werden bei einer Zündung durch das kurzschließende Element 25 nach einem Durchstanden oder Durchstoßen der Isolierfolie kurzgeschlossen.

Das Paket aus Stromschienen, der Isolierfolie 31 und Isolierplatten wird mit isolierten Schrauben verspannt.

Rund um die Schrauben 37 im Bereich der Kurzschließereinheiten 7,8, die auch die Schrauben-Mutter-Verbindungen 9 herstellen, sind Schraubenisolierhulsen 35 mit entsprechenden Isolierkragen 36 und der erforderlichen Hulsenlange vorhanden.

Durch den Isolierkragen 36, die Hülsenlänge, die Isolierfolie 31 die großer als die Querschiene 6 ist, bzw. überlappt angeordnet ist und den Kragen 29 werden Luft- und Kriechstrecken entsprechend der Normen eingehalten.

Der Gasgenerator 11, der in einer Kapselung 12 oder Druckgehäuse gehalten ist, wird mit einem Innengewinde 38 in der Isolierplatte 16 verschraubt.

Bei einer Zündung bewegt sich der Kurzschließerkolben unter hohem Druck zwischen den Stromschienen und schließt diese kurz, wobei er die Isolierfolie 31 durchbncht.

Das ausgestanzte Teil 39 kann an einer Öffnung an einer unteren, zweiten Isolierplatte 34 herausfallen und als Auslbseanzeige.
Dieses Teil 39 ist mit einem Loch 40 versehen.

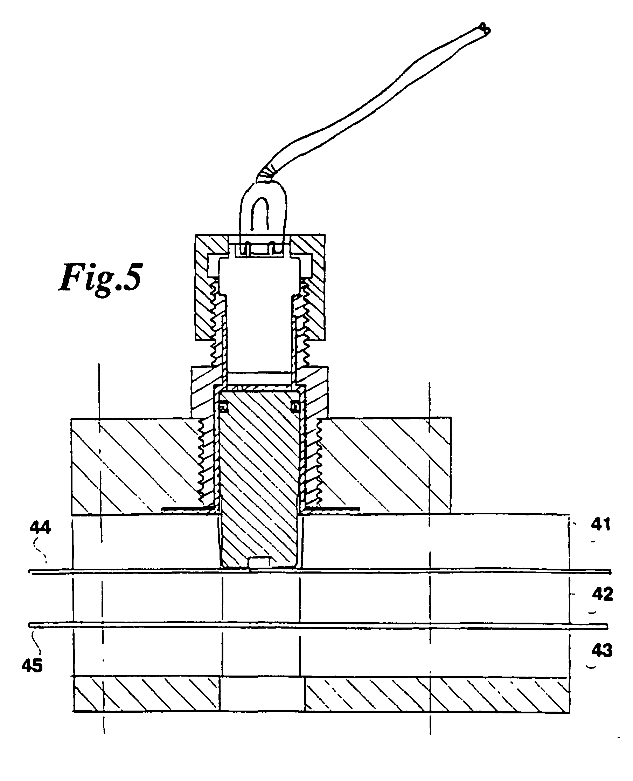

Eine weitere Ausführungsform ist in Fig. 5 dargestellt Hierbei handelt es sich aus einem dreipoligen Kurzschließer wie im vorangegangenen Beispiel jedoch mit einem einzigen Gasgenerator und drei paketweise ubereinander angeordneten Stromschienen 41,42,43, die mit ubereinander angeordneten Bohrungen versehen sind, wobei zwei Isolierfolien 44,45 vorhanden sind.
Bei einer Zündung des Gasgenerators schließt der Kurzschließerbolzen alle drei Stromschienen kurz. Beide Isolierfolien werden dabei durchbrochen.

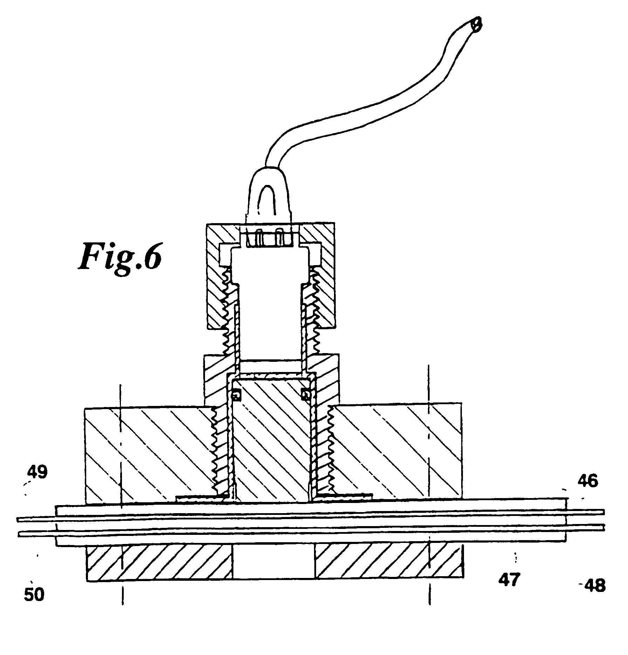

In einem weiteren Ausfuhrungsbeispiel werden dunne Stromschienen 46,47,48, jedoch ohne Bohrungen, mit zwischenliegenden Isolierfolien 49,50 paket- bzw sandwichartig angeordnet, wie Fig 6 zeigt.
Der Kurzschließerbolzen stanzt das gesamte Paket aus Stromschienen und Isolierfolien. Der Vorteil dieser Anordnung (Fig 6 u. 7) liegt in der toleranzerhabenen Konstruktion.

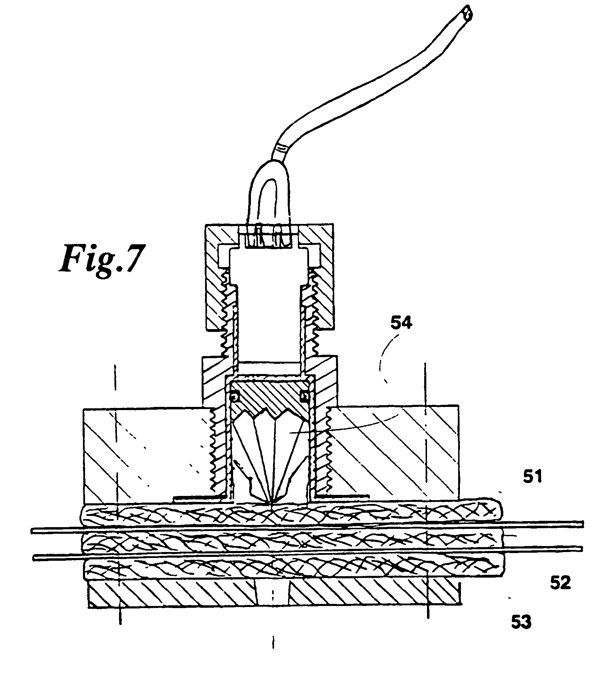

Die Fig. 7 zeigt eine andere Anordnung, die prinzipiell wie die Anordnung in Fig 6 ausgeführt ist, jedoch mit litzeartigen Stromschienen 51,52,53 und einem Kurzschließerbolzen, der pfeilformige Kontaktspitzen 54 aufweist, die das litzenmatenal durchdringen und kurzschließen. Die Litze wird mit einer stromleitenden Flüssigkeit mit hohem Siedepunkt bzw einer flussig metallischen Legierung getrankt Der Begriff Stromschiene umfaßt hier auch den Begriff Litze.

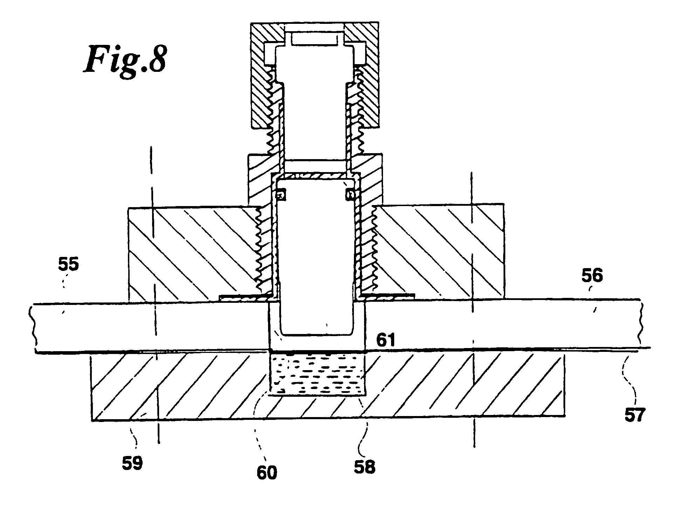

In einer letzten Ausführungsform, die in Fig. 8 gezeigt ist, sind drei Stromschienen auf einer Ebene sternförmig angeordnet, wovon nur zwei Stromschienen 55,56 gezeigt sind.
Der Kurzschließerbolzen ist im Sternpunkt der Stromschienen angeordnet ohne diese zu beruhren. Unterhalb der Stromschienen ist eine zu durchstoßende Isolierfolie 57 angeordnet, die auf ein Reservoir 58 einer elektrisch bzw. metallisch leitenden Flüssigkeit liegt.
Nach einer Zündung wird, wie vorher, die Membrane 61 zerstort wobei der Kurzschließerkolben die Flüssigkeit in den Luftspalt 60 verdrängt, so daß ein Kurzschluß entsteht.

Das Reservoir 58 wird durch eine Einsenkung einer unteren Isolierplatte 59 realisiert.

Bei der Montage der ersten Beispiele werden die Bohrungen 32,33 durch zwei Paßzylinder 61,62 und einem beide Paßzylinder 61,62 verbindenden Paßstift 63 zentriert. Die Membrane bzw. Isolierfolie 31 weist hierfur ein Loch 40 zur Durchführung des Paßstiftes auf.
Nach dem Zentrieren wird die Membrane mit den Stromschienen mit einen doppelseitig klebenden Klebefolie oder Klebepad fixiert.

Wie Fig. 10 zeigt kann auch der Kurzschließerbolzen, der hierfur eine Paßsacklochbohrung 66 aufweist, mit Hilfe des Paßstiftes 63 und des Paßzylinders 62 genau zentriert werden.

Die Erfindung spezifiziert sich vorrangig auf den Einsatz als zentrales Schutzorgan in ortsveranderlichen und stationaren Energieverteilungsanlagen, sowohl in Punktverteiler z.B. Hauptverteiler, als auch in Linienverteilern z.B. Schienenverteiler in der Nieder-, Mittel-, und Hochspannungstechnik. Die Erfindung kann auch als dezentrales Schutzorgan z.B. in Batterie-. Notstrom-, Kompensations-, und Bahnanlagen eingesetzt werden.

Das Grundprinzip beruht darauf, daß ein Gasgenerator, der durch einen definierten Zündstrom aktiviert wird, in sehr kurzer Zeit ein definiertes Gasvolumen liefert. Der Raum, in dem sich das Gasvolumen entwickelt ist ausreichend dicht und fest, so daß sich ein Druck bis 900 bar aufbaut Der Druck wird als Antneb fur einen Schließvorgang genutzt Die Leiter sind fur einen Kurzschlußstrom von uber 100kA uber einen Zeitraum von mindestens 500 ms ausgelegt.

### Liste der Bezugszeichen

Kurzschließer 1
Anschlußschienen 2,3,4
Anschlußbohrungen 5
Querstromschiene 6
Kurzschließereinheiten 7.8
Schrauben-Mutter-Verbindungen 9
Federscheiben 10
Gasgenerator 11
Kapselung 12
erstes Kapselteil 13
zweites Kapselteil 14
mutterformiges Teil 15
erste obere lsolierplatte 16
Dichtungsflächen 17-20
Zundöffnung 21
Druckraum 22
Druckraum 23
Druckmembran 24
kurzschließende Element 25
zylindrischer Abschnitt 26
konischer Abschnitt 27
Isolierhulse 28
Kragen 29
O-Ring 30
Isolierfolie 31
Bohrungen 32,33
zweite Isolierplatte 34
Schraubenisolierhülsen 35
Isolierkragen 36
Schrauben 37
Innengewinde 38
Teil 39
Loch 40
Stromschienen 41,42,43
Isolierfolien 44,45
Stromschienen 46,47,48
Isolierfolien 49,50
Stromschienen 51,52,53
Kontaktspitzen 54
Stromschienen 55,56
Isolierfolie 57
Reservoir 58
Isoherplatte 59
Luftspalt 60
Paßzylinder 61,62
Paßstift 63
Spiel 64
Bereich 65
Paßsacklochbohrung 66
Zylindrischen Abschnitt, unten 67

## Patentansprüche

1. Kurzschließer (1) für eine Störlichtbogen-Schutzvorrichtung zur Verwendung in Anlagen zur Verteilung elektrischer Energie mit einem Gasgenerator (11) und ein direkt vom dem Gasgenerator (11) angetriebenes kurzschließendes Elemen (25), **dadurch gekennzeichnet, daß** der Kurzschließer (1) aus einem sandwichartigen Paket aus Stromschienen (41,42,43,51,52,53,55,56) und mindestens einer dünnen Isolierfolie (31) besteht, wobei die Stromschienen (41,42,43,51,52,53,55,56) bei einer Zündung durch das kurzschließende Element (25) nach einem Durchstanzen oder Durchstoßen der Isolierfolie (31) kurzgeschlossen werden.

2. Kurzschließer nach Anspruch 1, **dadurch gekennzeichnet, daß** das Paket aus Stromschienen (41,42,43,51,52,53,55,56) mindestens einer Isolierfolie (31) und Isolierplatten (16,34) besteht.

3. Kurzschließer nach Anspruch 1 oder 2. **dadurch gekennzeichnet, daß** das Paket aus Stromschienen (41,42,43,51,52,53,55,56), mindestens einer Isolierfolie (31) und Isolierplatten (16,43) mit gegen die Stromschienen (41,42,43,51,52,53,55,56) isolierten Schrauben (37) verspannt wird.

4. Kurzschließer nach einem der vorhergehenden Anspruche, **dadurch gekennzeichnet, daß** die Stromschienen (41,42,43,51,52,53,55,56) gleichzeitig Anschlußschienen (2,4) sind.

5. Kurzschließer nach einem der vorhergehenden Anspruche, **dadurch gekennzeichnet, daß** der Gasgenerator (11) in einer Kapselung (12) oder in einem Druckgehause gehalten und auf einer Isolierplatte (16) befestigt ist

6. Verwendung des Kurzschließers (1) nach einem der vorhergehenden Ansprüche zum Kurzschlußschutz.

## Claims

1. Short-circuiter (1) for a fault-arc protection device for use in systems for distributing electrical energy having a gas generator (11) and a short-circuiting element (25), which is driven directly by the gas generator (11), **characterized in that** the short-circuiter (1) comprises a sandwich-like stack comprising busbars (41, 42, 43, 51, 52, 53, 55, 56) and at least one thin insulating film (31), the busbars (41, 42, 43, 51, 52, 53, 55, 56) being short-circuited when triggered by the short-circuiting element (25) once the insulating film (31) has been stamped through or penetrated.

2. Short-circuiter according to Claim 1, **characterized in that** the stack comprises busbars (41, 42, 43, 51, 52, 53, 55, 56), at least one insulating film (31) and insulating plates (16, 34).

3. Short-circuiter according to Claim 1 or 2, **characterized in that** the stack comprising busbars (41, 42, 43, 51, 52, 53, 55, 56), at least one insulating film (31) and insulating plates (16, 34) is braced using screws (37) which are insulated with respect to the busbars (41, 42, 43, 51, 52, 53, 55, 56).

4. Short-circuiter according to one of the preceding claims, **characterized in that** the busbars (41, 42, 43, 51, 52, 53, 55, 56) are at the same time connecting rails (2,4).

5. Short-circuiter according to one of the preceding claims, **characterized in that** the gas generator (11) is retained in an encapsulation (12) or in a pressure housing and is fixed on an insulating plate (16).

6. Use of the short-circuiter (1) according to one of the preceding claims for short-circuit protection.

## Revendications

1. Court-circuiteur (1) pour un dispositif de protection contre les arcs électriques parasites destiné à être utilisé dans les équipements de distribution d'énergie comprenant un générateur de gaz (11) et un élément court-circuitant (25) entraîné directement par le générateur de gaz (11), **caractérisé en ce que** le court-circuiteur (1) se compose d'un paquet de barres conductrices (41, 42, 43, 51, 52, 53, 55, 56) en sandwich et d'au moins un film isolant mince (31), les barres conductrices (41, 42, 43, 51, 52, 53, 55, 56) étant court-circuitées lors d'un amorçage par l'élément court-circuitant (25) après une perforation ou un transpercement du film isolant (31).

2. Court-circuiteur selon la revendication 1, **caractérisé en ce que** le paquet se compose de barres conductrices (41, 42, 43, 51, 52, 53, 55, 56), d'au moins un film isolant (31) et de plaques isolantes (16, 34).

3. Court-circuiteur selon la revendication 1 ou 2, **caractérisé en ce que** le paquet de barres conductrices (41, 42, 43, 51, 52, 53, 55, 56), d'au moins un film isolant (31) et de plaques isolantes (16, 34) est serré avec des vis (37) isolées par rapport aux barres conductrices (41, 42, 43, 51, 52, 53, 55, 56).

4. Court-circuiteur selon l'une des revendications précédentes, **caractérisé en ce que** les barres conductrices (41, 42, 43, 51, 52, 53, 55, 56) sont en même temps des barres de raccordement (2, 4).

5. Court-circuiteur selon l'une des revendications précédentes, **caractérisé en ce que** le générateur de gaz (11) est maintenu dans un blindage (12) ou un boîtier sous pression et il est fixé sur une plaque isolante (16).

6. Utilisation du court-circuiteur (1) selon l'une des revendications précédentes pour la protection contre les courts-circuits.
